Europäisches Patentamt

European Patent Office

Office européen des brevets

(19)

(11) EP 1 632 383 A1

(12) EUROPEAN PATENT APPLICATION

(43) Date of publication:
08.03.2006 Bulletin 2006/10

(51) Int Cl.:
*B60K 31/00* (2006.01)    *G08G 1/16* (2006.01)

(21) Application number: 05017133.9

(22) Date of filing: 05.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 01.09.2004  JP 2004254604

(71) Applicant: Mazda Motor Corporation
Aki-gun,
Hiroshima 730-8670 (JP)

(72) Inventor: Oka, Yakuji
Aki-gun
Hiroshima 730-8670 (JP)

(74) Representative: Müller-Boré & Partner
Patentanwälte
Grafinger Strasse 2
81671 München (DE)

(54) **Travelling control device, method and computer program product**

(57)     At first, it is determined whether or not the own vehicle travels in the auto-cruising mode. When the answer is YES, it is determined whether or not the traffic congestion occurs on the next lane. When the answer is YES, the steering device is controlled so as to shift the own vehicle's traveling position toward the opposite side from the next lane. Thereby, the own vehicle travels at the opposite-side shifted position at the constant speed. Accordingly, the own vehicle's crash against the cutting-into vehicle from the next lane when the traffic congestion occurs on the next lane can be properly avoided without operating the accelerator, brake, or steering handle.

FIG. 3

EP 1 632 383 A1

**Description**

The present invention relates a traveling control device methof and computer program for a vehicle.

Conventionally, a traveling control device of a vehicle, which performs on a highway or the like an auto-cruising control to adjust a vehicle speed of an own vehicle at a constant speed or a following-traveling control to adjust the own vehicle's speed so as to control a vehicle-to-vehicle distance between the own vehicle and a vehicle traveling in front of the own vehicle at a target vehicle-to-vehicle distance, is known. For example, Japanese Patent Laid-Open Publication No. 2004-38861 discloses the traveling control device of a vehicle which performs the following-traveling control, in which when a traffic congestion occurs on a traveling lane of the own vehicle, the target vehicle-to-vehicle distance is changed.

Generally, when the traffic congestion occurs on another lane next to the own vehicle's traveling lane, other vehicles traveling on the next lane sometimes cut into the traveling lane of the own vehicle to get out of the traffic congestion. Accordingly, it is preferable that the above-described traveling control device of a vehicle is constituted so as to avoid a crash against such vehicles cutting into in front of the own vehicle, without operating the accelerator, brake, or steering handle, when the traffic congestion occurs on the next lane.

The present invention has been devised in view of the above-described problem, and an object of the present invention is to provide reduce a probability of or properly avoid the crash against the cutting-into vehicle from the next lane, without operating the accelerator, brake, or steering handle, when the traffic congestion occurs on the next lane.

This object is solved by the features of the independent claims. Preferred embodiments of the present invention are subject of the dependent claims.

According to the present invention, there is provided a traveling control device for a vehicle, comprising a vehicle running condition control device operative to control a vehicle running condition of an own vehicle so as to be set at a specified vehicle condition, a traveling position detecting device operative to detect a traveling position of the own vehicle on a traveling lane of the own vehicle, a traffic congestion determining device operative to determine whether a traffic congestion occurs or not on a lane which is next to the traveling lane of the own vehicle; and a shifting control device operative to shift the traveling position of the own vehicle toward a substantially opposite side from the next lane when said vehicle running condition control device performs the vehicle running condition control of the own vehicle and it is determined by said traffic congestion determining device that the traffic congestion occurs on the next lane.

Accordingly, since the shifting control device performs the shifting control to shift or move the traveling position of the own vehicle toward the substantially opposite side from the next lane when the vehicle running condition control device performs the vehicle running condition control (e.g. speed control to control the speed to be substantially constant and/or vehicle distance control to control the distance to a preceding vehicle to be substantially constant or longer than a specified (predetermined or predeterminable) distance) of the own vehicle and it is determined by the traffic congestion determining device that the traffic congestion occurs on the next or adjacent lane, the own vehicle is kept or moved away from the next lane. Thus, the crash against the cutting-into vehicle from the next lane can be properly avoided (or the probability thereof can be reduced) particularly without operating the accelerator, brake, and/or steering handle or wheel, when the vehicle running condition control device controls the own vehicle's running condition ( e.g. the speed and/or distance to the preceding vehicle) and the traffic congestion occurs on the next or adjacent or neighboring lane.

According to a preferred embodiment of the present invention, there is provided a traveling control device of a vehicle comprising a vehicle speed control device operative to selectively control a vehicle speed of an own vehicle so as to be set at a specified (predetermined or predeterminable) vehicle speed (as the preferred specific vehicle running condition), a traveling position detecting device operative to detect a traveling position of the own vehicle on a traveling lane of the own vehicle, a traffic congestion determining device operative to determine whether a traffic congestion occurs or not on a lane which is next to the traveling lane of the own vehicle, and a shifting control device operative to shift or displace or change the traveling position of the own vehicle toward a substantially opposite side from the next lane when the vehicle running condition or speed control device performs the vehicle running condition or speed control of the own vehicle and it is determined by the traffic congestion determining device that the traffic congestion occurs on the next lane.

Accordingly, since the shifting control device performs the shifting control to shift the traveling position of the own vehicle toward the substantially opposite side from the next lane when the vehicle running condition or speed control device performs the vehicle running condition or speed control (e.g. speed control to control the speed to be substantially constant and/or vehicle distance control to control the distance to a preceding vehicle to be substantially constant or longer than a specified (predetermined or predeterminable) distance) of the own vehicle and it is determined by the traffic congestion determining device that the traffic congestion occurs on the next lane, the own vehicle is kept away from the next lane. Thus, the crash against the cutting-into vehicle from the next lane can be properly avoided without operating the accelerator, brake, or steering handle or wheel, when the vehicle running condition or speed control device controls the own vehicle's running condition ( e.g. the speed and/or distance to the preceding vehicle) and the traffic congestion occurs on the next or adjacent or neighboring lane.

According to a preferred embodiment of the present invention, there is further provided a cutting-into probability calculating device which calculates a probability of another vehicle traveling on the next lane cutting into the traveling lane of the own vehicle when it is determined by the traffic congestion determining device that the traffic congestion occurs on the next lane, wherein the shifting control device is constituted so as to perform the shifting control based on the probability calculated by the cutting-into probability calculating device when the vehicle running condition or speed control device performs the vehicle running condition or speed control of the own vehicle and it is determined by the traffic congestion determining device that the traffic congestion occurs on the next lane.

Preferably, the probability of another vehicle traveling cutting into the own vehicle's traveling lane from the next lane with the traffic congestion is considered influenced by the driver's mental state.

According to the above-described preferred embodiment, the cutting-into probability calculating device calculates the probability of another vehicle traveling on the next lane cutting into the own vehicle's traveling lane when it is determined by the traffic congestion determining device that the traffic congestion occurs on the next lane, and the shifting control device performs the shifting control based on the probability calculated by the cutting-into probability calculating device when the vehicle running condition or speed control device performs the vehicle running condition or speed control of the own vehicle and it is determined by the traffic congestion determining device that the traffic congestion occurs on the next lane. Accordingly, the shifting control device can perform the shifting control which is suitable to the driver's mental state of the vehicle traveling on the next lane with the traffic congestion.

According to another preferred embodiment of the present invention, the shifting control device is constituted so as to perform the shifting control of the own vehicle by controlling a steering device when the vehicle running condition or speed control device performs the vehicle running condition or speed control of the own vehicle and it is determined by the traffic congestion determining device that the traffic congestion occurs on the next lane.

Accordingly, an appropriate control of the shifting control device according to the present invention can be attained.

According to another preferred embodiment of the present invention, there is further provided a lane-deviation preventing device operative to prevent the own vehicle from deviating from the traveling lane of the own vehicle when the shifting control device performs the shifting control of the own vehicle by controlling the steering device.

Accordingly, since the lane-deviation preventing device prevents the own vehicle from deviating from the traveling lane of the own vehicle when the shifting control device performs the shifting control of the own vehicle by controlling the steering device, the deviation of the own vehicle from the traveling lane can be properly prevented when the shifting control device performs the shifting control.

According to another preferred embodiment of the present invention, the vehicle running condition or speed control device is constituted so as to control the own vehicle's speed at a target vehicle speed which is set as a specified vehicle speed (as a preferred specified (predetermined or predeterminable) vehicle running condition).

Accordingly, the present invention can be properly applied to the device which performs the so-called auto-cruising control enabling the driver's non-operation of the accelerator or the brake.

According to another preferred embodiment of the present invention, the vehicle running condition or speed control device is constituted so as to control the own vehicle's speed in such a manner that a vehicle-to-vehicle distance between the own vehicle and a vehicle which travels on the same lane and substantially in front of the own vehicle is equal to a target vehicle-to-vehicle distance (as a preferred specified (predetermined or predeterminable) vehicle running condition).

Accordingly, the present invention can be properly applied to the device which performs the so-called following-traveling control enabling the drivers non-operation of the accelerator or the brake.

According to another preferred embodiment of the present invention, the cutting-into probability calculating device is constituted so as to calculate the probability based on a distance of the traffic congestion on the next lane.

Accordingly, an appropriate control of the cutting-into probability calculating device can be attained.

According to another preferred embodiment of the present invention, the cutting-into probability calculating device is constituted so as to calculate the probability based on a time elapsed after the traffic congestion has occurred on the next lane.

Accordingly, another appropriate control of the cutting-into probability calculating device can be attained.

According to another preferred embodiment of the present invention, the cutting-into probability calculating device is constituted so as to calculate the probability based on a speed difference between the own vehicle's speed and a speed of the another vehicle traveling on the next lane.

Accordingly, another appropriate control of the cutting-into probability calculating device can be attained.

According to another preferred embodiment of the present invention, the cutting-into probability calculating device is constituted so as to calculate the probability based on a vehicle-to-vehicle distance between the own vehicle and a vehicle which travels on the same lane and in front of the own vehicle.

Accordingly, another appropriate control of the cutting-into probability calculating device can be attained.

According to the invention, there is further provided a traveling control method for a vehicle, in particular for use with the traveling control device according to the invention or a preferred embodiment thereof, comprising the following steps:

a vehicle running condition control step of controlling a vehicle running condition of an own vehicle so as to be set at a specified vehicle condition;

a traveling position detecting step of detecting a traveling position of the own vehicle on a traveling lane of the own vehicle;

a traffic congestion determining step of determining whether a traffic congestion occurs or not on a lane which is next to the traveling lane of the own vehicle; and

a shifting control step of shifting the traveling position of the own vehicle toward a substantially opposite side from the next lane when said vehicle running condition controlling of the own vehicle is performed and it is determined that the traffic congestion occurs on the next lane.

According to the invention, there is still further provided a computer program product, in particular stored on a computer-readable storage medium, comprising computer-readable instructions which, when loaded and run on a suitable system can perform the steps of the traveling control method according to the invention or a preferred embodiment thereof.

Other features, aspects, and advantages of the present invention will become apparent from the following description which refers to the accompanying drawings.

FIG. 1 is a diagram showing a scene of a vehicle traveling on a highway at around an interchange according to an embodiment of the present invention.
FIG. 2 is a block diagram of a traveling control device of a vehicle.
FIG. 3 is a flowchart of control processing of the traveling control device of a vehicle.
FIG. 4 is a flowchart of control processing of the traveling control device of a vehicle.
FIG. 5 is a flowchart of control processing of the traveling control device of a vehicle.

Hereinafter, preferred embodiments of the present invention will be described referring to the accompanying drawings. It should be understood that even though embodiments are separately described, single features thereof may be combined to additional embodiments.

EMBODIMENT 1

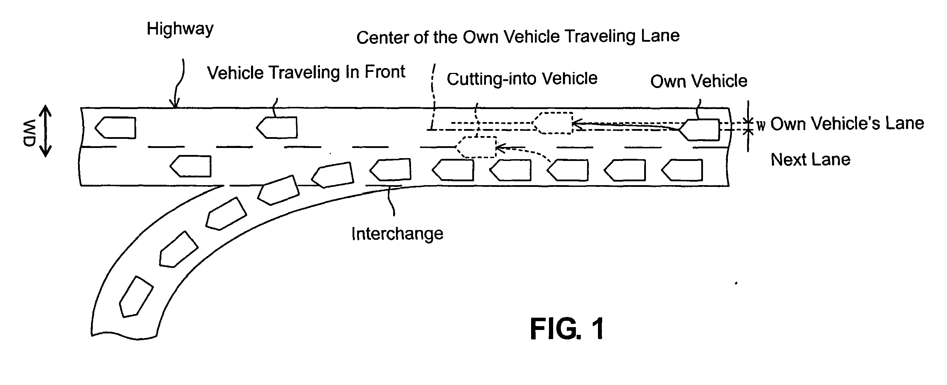

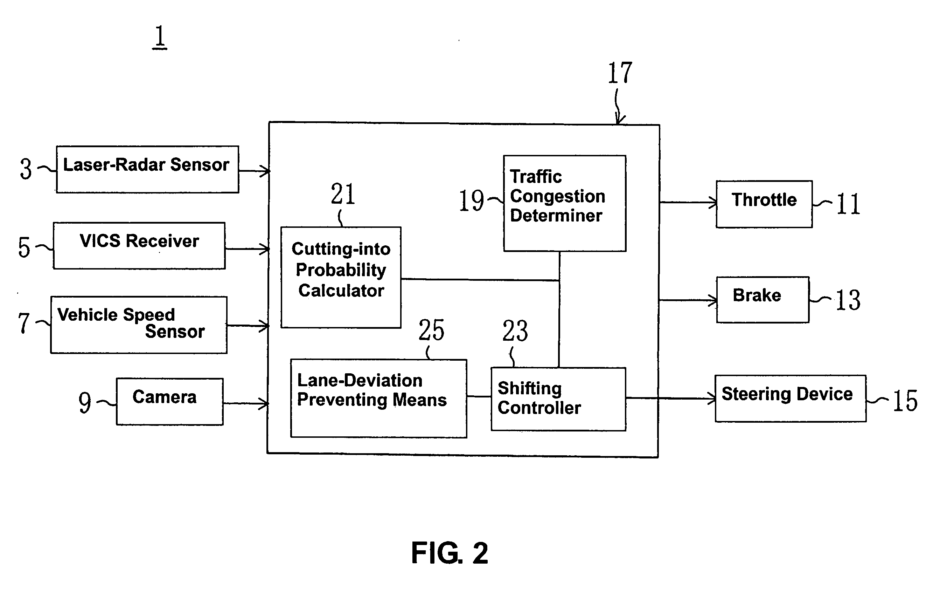

A traveling control device 1 according to a preferred embodiment of the present invention performs its appropriate control when a vehicle (hereinafter, referred to as "own vehicle") travels on a specified lane of a highway having plural lanes, especially at around an interchange of the highway, as shown in FIG. 1 (the highway having two lanes in the same direction in the figure showing a left-hand drive scenario such as in Japan or Great Britain). As shown in FIGS. 1 and 2, the traveling control device 1 comprises a vehicle sensor (preferably comprising a laser-radar sensor 3) operative to detect a vehicle-to-vehicle distance between the own vehicle and a vehicle traveling substantially in front of the own vehicle, a relative speed between the own vehicle's speed and/or a vehicle speed of another vehicle traveling on a lane next or adjacent or near to the own vehicle's traveling lane, a receiver 5 for VICS (Vehicle Information and Communication System, the road traffic information communication system in Japan) and/or for TMC (Traffic Message Channel, system for delivering traffic and travel information to drivers in Europe) to receive road-traffic and travel information (particularly via infrared, microwaves in the ISM band, FM, FM-RDS, Digital Audio Broadcast (DAB), satellite radio or the like) preferably including a traffic congestion, a vehicle speed sensor 7 operative to detect the own vehicle's speed, a camera 9 operative to detect a traveling position of the own vehicle on the traveling lane by picking up an image around the own vehicle, a throttle 11, a brake 13, a steering device 15, and a controller 17 operative to perform respective controls. The above-described vehicle traveling in front of the own vehicle means a vehicle which travels on the same lane and just in front of the own vehicle. The above-described lane next to the own vehicle's traveling lane means a lane which is adjacent to the traveling lane of the own vehicle. Herein, a vehicle speed control device preferably comprises the throttle 11, the brake 13, and/or the controller 17, a traveling position detecting device preferably comprises the camera 9, and a steering device preferably comprises the steering device 15.

To an input side of the controller 17 are connected the laser-radar sensor 3, information receiver 5, vehicle speed sensor 7, camera 9 and the like, and to an output side thereof are connected the throttle 11, brake 13, steering device 15, and the like. The controller 17 performs the auto-cruising control in its mode which adjusts actuators of the throttle 11 and brake 13 or the like so as to control the own vehicle' speed at a target vehicle speed which has been set (hereinafter, referred to as "set speed"). The auto-cruising mode and the set speed are set, for example, by the driver with some specified operations. A specified (predetermined or predeterminable) vehicle speed preferably corresponds to "the set speed". Additionally or alternatively, the auto-cruising control may be performed to control the speed so as to maintain a distance between the own vehicle and the vehicle traveling substantially in front of the own vehicle (see also embodiment 3).

Further, the controller 17 comprises a traffic congestion determiner 19 operative to determine whether the traffic congestion occurs or not on the next or adjacent lane, a cutting-into probability calculator 21 which calculates a probability (hereinafter, referred to as "cutting-into probability") of another vehicle traveling on the next or adjacent lane cutting into the traveling lane of the own vehicle when it is determined by the traffic congestion determiner 19 that the traffic congestion occurs on the next lane, a shifting controller 23 operative to shift the traveling position of the own vehicle toward an opposite side (the right side in FIG. 1) from the next lane by controlling the steering device 15 when the vehicle speed control device performs the vehicle speed control of the own vehicle and it is determined by the traffic congestion determiner 19 that the traffic congestion occurs on the next lane, and a lane-deviation preventing means 25 operative to prevent the own vehicle from deviating from the traveling lane (or a preferred reference line) of the own vehicle when the shifting controller 23 performs the shifting control of the own vehicle. Herein, a traffic congestion determining device preferably comprises the traffic congestion determiner 19, a cutting-into probability calculating device preferably comprises the cutting-into probability calculator 21, a shifting control device preferably comprises the shifting controller 23, and a lane-deviation preventing device preferably comprises the lane-deviation preventing means 25.

The traffic congestion determiner 19 determines whether or not the traffic congestion occurs preferably based on the road traffic information and the like received from the information receiver 5.

The cutting-into probability calculator 21 calculates the cutting-into probability of the vehicle traveling on the next lane cutting into jut in front of the own vehicle preferably based on a distance of the traffic congestion on the next lane, a time elapsed after the traffic congestion has occurred on the next lane, a speed difference between the own vehicle's speed and a peed of the another vehicle traveling on the next lane, and a vehicle-to-vehicle distance between the own vehicle and a vehicle which travels substantially on the same lane and substantially in front of the own vehicle. The above-described traffic congestion distance and time elapsed are considered parameters which are relevant to a mental state of a driver of the vehicle traveling on the next lane who may want to cut into to get out of the traffic congestion. The above-described speed difference and vehicle-to-vehicle distance are considered parameters which are relevant to the mental state of the driver of the vehicle traveling on the next lane who may decide a timing of the cutting-into. Also, the traffic congestion distance and time elapsed are obtained preferably based on the road traffic information from the information receiver 5 and the like, the speed deference preferably is obtained based on detecting results of the vehicle sensor (preferably the laser-radar sensor 3 and/or the vehicle speed sensor 7), and the vehicle-to-vehicle distance is obtained based on detecting results of the vehicle sensor (preferably the laser-radar sensor 3).

Specifically, the cutting-into probability calculator 21 calculates the cutting-into probability F (Having a virtual unity) based on the following equation (1).

$$F = a * L + b * T + c * V + d * R \qquad (1)$$

Herein, F is the cutting-into probability, L is the traffic congestion distance, T is the time elapsed, V is the speed difference, R is the vehicle-to-vehicle distance. Also, a, b, c and d are constant values (having appropriate units) to satisfy relationships of a>b>c>d.

The shifting-controller 23 controls the steering device 15 in such a manner that the traveling position of the own vehicle is shifted toward the opposite side (the right side in FIG. 1) from the next lane with respect to the current position based on the cutting-into probability calculated by the cutting-into probability calculator 21 when the auto-cruising control is performed and it is determined by the traffic congestion determiner 19 that the traffic congestion occurs on the next lane.

Further, the controller 17 controls the own vehicle such that a predetermined reference position (preferably the substantially center position) of the own vehicle can be located at a corresponding reference line (preferably substantially a center line) of the traveling lane in the width direction WD.

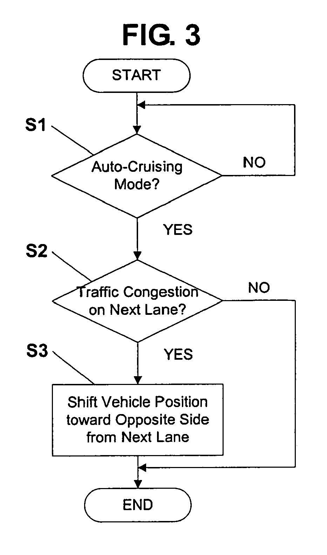

Hereinafter, the control processing of the traveling control device 1 will be described referring to FIG. 1 and a flowchart of FIG. 3. At first, in step S1, it is determined whether or not the own vehicle travels in the auto-cruising mode. When the answer to the step S1 is YES, the control sequence proceeds to step S2. When the answer is NO, the control sequence returns to start.

In the step S2, it is determined whether or not the traffic congestion occurs on the next lane. When the answer to the step S2 is YES, the control sequence proceeds to step S3, and when the answer is NO, it returns to the start.

In the step S3, the steering device 15 is controlled based on the cutting-into probability calculated such that the traveling position of the own vehicle can be shifted or moved toward the opposite side from the next lane, i.e. the right side on the lane in the example shown in FIG. 1. Thereby, the own vehicle will travel at a opposite-side (e.g.

right-side) shifted position with respect to the present traveling position preferably at the substantially constant speed. After the vehicle has passed the portion of traffic congestion portion of the next lane, the vehicle's traveling position is changed toward or to a substantially original position.

According to the present embodiment described above, since the shifting controller 23 performs the shifting control to shift the traveling position of the own vehicle toward the opposite side from the next lane preferably when the controller 17 performs the auto-cruising control and it is determined by the traffic congestion determiner 19 that the traffic congestion occurs on the next lane, the own vehicle is kept away from the next lane. Thus, the crash against the cutting-into vehicle from the next lane can be properly avoided or its probability can be reduced preferably without operating the accelerator, brake 13, and/or steering handle or wheel, when the auto-cruising control is performed and the traffic congestion occurs on the next lane. Thereby, the safety of the own vehicle can be improved when the controller 17 performs the cruising control.

Particularly, the probability of another vehicle traveling cutting into the own vehicle's traveling lane from the next lane with the traffic congestion is considered influenced by the driver's mental state.

According to the present embodiment, the cutting-into probability calculator 21 calculates the probability of another vehicle traveling on the next lane cutting into the own vehicle's traveling lane when it is determined by the traffic congestion determiner 19 that the traffic congestion occurs on the next lane, and the shifting controller 23 performs the shifting control based on the probability calculated by the cutting-into probability calculator 21 when the auto-cruising control is performed and it is determined by the traffic congestion determiner 19 that the traffic congestion occurs on the next lane. Accordingly, the shifting controller 23 can perform the shifting control which is suitable to the driver's mental state of the vehicle traveling on the next lane with the traffic congestion.

Also, since the lane-deviation preventing means 25 preferably prevents the own vehicle from deviating from the traveling lane of the own vehicle when the shifting controller 23 performs the shifting control of the own vehicle by controlling the steering device 15, the deviation of the own vehicle from the traveling lane can be properly prevented when the shifting controller 23 performs the shifting control. EMBODIMENT 2

The present embodiment is different from the above-described embodiment 1 in a controlling manner of the shifting controller 23. The above-described shifting controller 23 preferably performs the shifting control based on the probability calculated by the cutting-into probability calculator 21 based on the cutting-into probability calculated by the cutting-into probability calculator 21 when it is determined by the traffic congestion determiner 15 that the traffic congestion occurs on the next lane. Specifically, for example, the shifting controller 23 changes the distance of the reference position of the own vehicle from the reference line of the own vehicle's lane by the specific (predetermined or predeterminable) amount of shift or spacing W1 along the widthwise direction WD in a direction substantially opposite from the adjacent or next lane, when the cutting-into probability is small (or below a first specified (predetermined or predeterminable) threshold F1), changes the distance of the reference position of the own vehicle from the reference line of the own vehicle's lane by the specific (predetermined or predeterminable) amount of shift or spacing W2>W1 along the widthwise direction WD in a direction substantially opposite from the adjacent or next lane, when the cutting-into probability is middle (or between the first specified threshold F1 and a second specified (predetermined or predeterminable) threshold F2, wherein F2>F1), and changes the distance of the reference position of the own vehicle from the reference line of the own vehicle's lane by the specific (predetermined or predeterminable) amount of shift or spacing W3>W2>W1 along the widthwise direction WD in a direction substantially opposite from the adjacent or next lane, when the cutting-into probability is large (or higher than the second specified threshold F2). The range of the small, middle and large cutting-into probability (or the thresholds F1 and F2) are or can be set previously, and may be dependent on the speed of the own vehicle.

Namely, as shown in FIG. 1, where the distance of the own vehicle's position (preferably its reference position) from the reference line (preferably substantially the center) of the traveling lane is indicated as W, the shifting controller 23 performs the shifting control, for example, in such a manner that the center position of the own vehicle is shifted toward the opposite side from the next lane so as to be located at the position of W=300 mm when the cutting-into probability F is small (or below or equal to the first specified threshold F1), at the position of W=600 mm when the cutting-into probability F is middle (or between the first and second thresholds F1 and F2), and at the position of W=900 mm when the cutting-into probability F is large (or higher than the second specified threshold F2, see FIG. 1). Herein, the range of the cutting-into probability F (i.e., small, middle and large) has been determined previously. The specific distance of W described above can be set properly.

Herein, preferably when the auto-cruising control is performed, the traffic congestion occurs on the next lane and the own vehicle is traveling at the position further away from the next lane than a specified distance corresponding to the calculated cutting-into probability, the shifting controller 23 will not perform the shifting control.

The lane-deviation preventing means 25 sets an upper limit of the above-described distance W to prevent the own vehicle from deviating from the traveling lane of the own vehicle during the shifting control of the shifting controller 23.

Other features and advantages are similar or substantially the same as the embodiment 1.

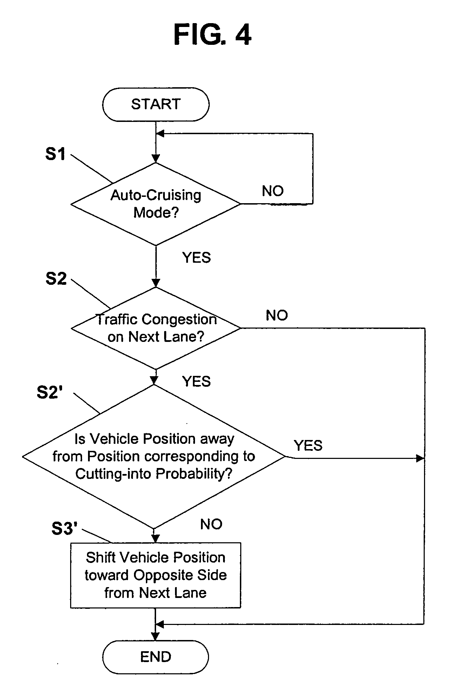

Hereinafter, the control processing of the traveling control device 1 will be described referring to FIG. 1 and a flowchart of FIG. 4. At first, in step S1, it is determined whether or not the own vehicle travels in the auto-cruising mode. When the answer to the step S1 is YES, the control sequence proceeds to step S2. When the answer is NO, the control sequence returns to start.

In the step S2, it is determined whether or not the traffic congestion occurs on the next lane. When the answer to the step S2 is YES, the control sequence proceeds to step S2', and when the answer is NO, it returns to the start.

In the step S2', it is determined whether or not the own vehicle's position is away from the specified (predetermined or predeterminable) position (or reference position) corresponding to the calculated cutting-into probability, toward the opposite side, i.e., the right side (for example, from the position of W=300 mm when the cutting-into probability F is small). When the answer to the step S2' is NO, the control sequence proceeds to step S3', and when the answer is YES, it returns to the start.

In the step S3', the steering device 15 is controlled such that the own vehicle's traveling position is located at the specified position corresponding to the calculated cutting-into probability. Thereby, the own vehicle travels at the right-side shifted position at the constant speed. After the vehicle has passed the portion of traffic congestion portion of the next lane, the vehicle's traveling position is controlled to the original traveling position.

According to the present embodiment, the same function and effect as those of the embodiment 1 are obtained.

EMBODIMENT 3

In the present embodiment, the controller 17 performs, not the auto-cruising control but the so-called following-traveling control. Namely, the controller 17 sets a target vehicle-to-vehicle distance between the own vehicle and the vehicle traveling in front of the own vehicle in the following-traveling mode, and the controller 17 adjusts the vehicle speed, preferably the actuators of the throttle 11 and/or the brake 13 and the like in such a manner that the vehicle-to-vehicle distance between the own vehicle and the vehicle traveling in front is substantially equal to the set target vehicle-to-vehicle distance. That is, the controller 17 preferably adjusts the actuators of the throttle 11 and/or the brake 13 and the like in such a manner that the own vehicle's speed is substantially equal to the same speed as the vehicle traveling substantially in front of the own vehicle. For example, the controller 17 adjusts the actuators of the throttle 11 and the brake 13 and the like so that the own vehicle's speed is equal to about 80 km/h when the following-traveling control is performed and the vehicle in front travels at the speed of about 80 km/h or less. A following-traveling control mode is set, for example, by the driver with some specified (predetermined or predeterminable) operations. Other features and advantages are similar or substantially the same as the embodiment 1. The specified (predetermined or predeterminable) vehicle speed preferably corresponds to the "the substantially same speed as the vehicle traveling in front."

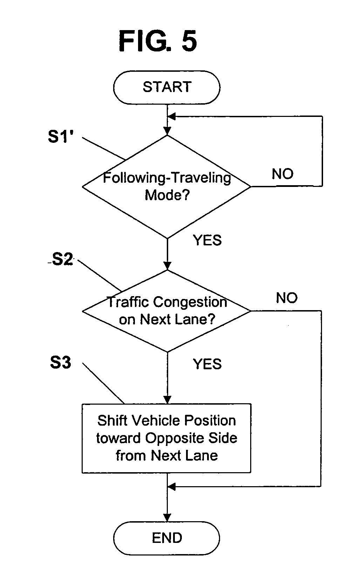

Hereinafter, the control processing of the traveling control device 1 will be described referring to FIG. 1 and a flowchart of FIG. 5. At first, in step S1', it is determined whether or not the own vehicle travels in the following-traveling mode. When the answer to the step S1' is YES, the control sequence proceeds to step S2. When the answer is NO, the control sequence returns to a start.

In the step S2, it is determined whether or not the traffic congestion occurs on the next lane. When the answer to the step S2 is YES, the control sequence proceeds to step S3, and when the answer is NO, it returns to the start.

In the step S3, the steering device 15 is controlled based on the calculated cutting-into probability such that the own vehicle's traveling position is shifted at the right side. Thereby, the own vehicle travels at the right-side shifted position at the substantially same (preferably substantially constant) speed as the vehicle traveling in front of the own vehicle. After the vehicle has passed the portion- of traffic congestion portion of the next lane, the vehicle's traveling position is controlled to the original traveling position.

According to the present embodiment, the same function and effect as those of the embodiment 1 are obtained.

OTHER EMBODIMENTS

Although the cutting-into probability is calculated based on the equation (1) in the respective embodiments described above, it may be obtained by different manners.

Also, although the cutting-into probability is calculated based on the above-described traffic congestion distance, elapsed time, vehicle speed difference, and/or vehicle-to-vehicle distance, it may be calculated based on at least one of them.

Further, although the shifting control is performed based on the cutting-into probability in the respective embodiments described above, for example, it may be controlled only when the cutting-into probability of the vehicle traveling on the next lane is higher than a specified probability.

Also, although the own vehicle's deviation from the traveling lane is prevented by setting the upper limit of the distance W during the shifting control by the shifting controller 23 in the respective embodiment described above (see the embodiment 2), other manners to prevent the vehicle deviation may be applied.

Also, the auto-cruising control or the following-traveling control are performed in the respective embodiments described above, these both controls may be performed at the same time.

The reference line of the own vehicle's lane may be chosen differently from the substantially center line and may be a side line, a separating line, a guardrail and/or may be set based on GPS-signals and corresponding road information. A reference line may be also determined on the basis of two or more of the above reference parameters.

The present invention should not be limited to the above-described embodiments and modified characteristics, but any other modifications and improvements may be applied within the scope of a sprit of the present invention.

**Claims**

1. A traveling control device (1) for a vehicle, comprising:

   a vehicle running condition control device (11, 13, 17) operative to control a vehicle running condition of an own vehicle so as to be set at a specified vehicle condition;
   a traveling position detecting device (9) operative to detect a traveling position of the own vehicle on a traveling lane of the own vehicle;
   a traffic congestion determining device (19) operative to determine whether a traffic congestion occurs or not on a lane which is next to the traveling lane of the own vehicle; and
   a shifting control device (23) operative to shift the traveling position of the own vehicle toward a substantially opposite side from the next lane when said vehicle running condition control device (11, 13, 17) performs the vehicle running condition control of the own vehicle and it is determined by said traffic congestion determining device (19) that the traffic congestion occurs on the next lane.

2. The traveling control device for a vehicle of claim 1, further comprising a cutting-into probability calculating device (21) which calculates a probability of another vehicle traveling on the next lane cutting into the traveling lane of the own vehicle when it is determined by said traffic congestion determining device (19) that the traffic congestion occurs on the next lane,
   wherein said shifting control device (23) is constituted so as to perform the shifting control based on the probability calculated by said cutting-into probability calculating device (21) when said vehicle running condition control device (11, 13, 17) performs the vehicle running condition control of the own vehicle and it is determined by said traffic congestion determining device (19) that the traffic congestion occurs on the next lane.

3. The traveling control device for a vehicle of claims 1 or 2, wherein said shifting control device (23) is constituted so as to perform the shifting control of the own vehicle by controlling a steering device (15) when said vehicle running condition control device (11, 13, 17) performs the vehicle running condition control of the own vehicle and it is determined by said traffic congestion determining device (19) that the traffic congestion occurs on the next lane.

4. The traveling control device for a vehicle of one of the preceding claims, further comprising a lane-deviation preventing device (25) operative to prevent the own vehicle from deviating from the traveling lane of the own vehicle when said shifting control device (23) performs the shifting control of the own vehicle by controlling the steering device (15).

5. The traveling control device for a vehicle of one of the preceding claims, wherein said vehicle running condition control device (11, 13, 17) is constituted so as to control the own vehicle's speed substantially at a target vehicle speed which is set as a specified vehicle speed as the specified vehicle running condition.

6. The traveling control device for a vehicle of one of the preceding claims, wherein said vehicle running condition control device (11, 13, 17) is constituted so as to control the own vehicle's running condition in such a manner that a vehicle-to-vehicle distance between the own vehicle and a vehicle which travels on the same lane and substantially in front of the own vehicle is substantially equal to a target vehicle-to-vehicle distance as the specified vehicle condition.

7. The traveling control device for a vehicle of one of the preceding claims in combination with claim 2, wherein said cutting-into probability calculating device (21) is constituted so as to calculate the probability based on a distance of the traffic congestion on the next lane.

8. The traveling control device for a vehicle of one of the preceding claims in combination with claim 2, wherein said cutting-into probability calculating device (21) is constituted so as to calculate the probability based on a time elapsed after the traffic congestion has occurred on the next lane.

9. The traveling control device for a vehicle of one of the preceding claims in combination with claim 2, wherein said cutting-into probability calculating device (21) is constituted so as to calculate the probability based on a speed difference between the own vehicle's speed and a speed of the another vehicle traveling on the next lane.

10. The traveling control device for a vehicle of one of the preceding claims in combination with claim 2, wherein said cutting-into probability calculating device (21) is constituted so as to calculate the probability based on a vehicle-to-vehicle distance between the own vehicle and a vehicle which travels on the same lane and in front of the own vehicle.

11. A traveling control method for a vehicle, comprising the following steps:

a vehicle running condition control step of controlling a vehicle running condition of an own vehicle so as to be set at a specified vehicle condition;
a traveling position detecting step of detecting a traveling position of the own vehicle on a traveling lane of the own vehicle;
a traffic congestion determining step of determining whether a traffic congestion occurs or not on a lane which is next to the traveling lane of the own vehicle; and
a shifting control step of shifting the traveling position of the own vehicle toward a substantially opposite side from the next lane when said vehicle running condition controlling of the own vehicle is performed and it is determined that the traffic congestion occurs on the next lane.

12. A computer program product comprising computer-readable instructions which, when loaded and run on a suitable system can perform the steps of the traveling control method according to claim 11.

Highway

Center of the Own Vehicle Traveling Lane

Vehicle Traveling In Front    Cutting-into Vehicle    Own Vehicle

WD

w Own Vehicle's Lane

Next Lane

Interchange

**FIG. 1**

**FIG. 2**

EP 1 632 383 A1

# FIG. 3

START

S1
Auto-Cruising
Mode?      NO

YES

S2
Traffic Congestion
on Next Lane?      NO

YES

S3
Shift Vehicle Position
toward Opposite Side
from Next Lane

END

# FIG. 4

```
                    ┌─────────────┐
                    │    START    │
                    └─────────────┘
                           │
            S1             ▼
                      ╱─────────╲          NO
                     ╱ Auto-Cruising╲─────────┐
                     ╲   Mode?      ╱          │
                      ╲─────────╱              │
                           │ YES               │
            S2             ▼                    │
                      ╱─────────╲    NO         │
                     ╱Traffic Congestion╲──────────────────┐
                     ╲ on Next Lane?   ╱                    │
                      ╲─────────╱                           │
                           │ YES                            │
            S2'            ▼                                │
                  ╱────────────────╲                        │
                 ╱ Is Vehicle Position away╲   YES          │
                ╱ from Position corresponding to╲───────────┤
                ╲ Cutting-into Probability?    ╱            │
                 ╲────────────────╱                         │
                           │ NO                             │
            S3'            ▼                                │
              ┌──────────────────────┐                     │
              │  Shift Vehicle Position│                    │
              │  toward Opposite Side  │                    │
              │  from Next Lane        │                    │
              └──────────────────────┘                     │
                           │                                │
                           ▼◄───────────────────────────────┘
                    ┌─────────────┐
                    │    END      │
                    └─────────────┘
```

# FIG. 5

```
        ( START )
           │
S1'        ▼
    ┌─────────────────┐       NO
    │ Following-Traveling │ ──────►
    │      Mode?          │
    └─────────────────┘
           │ YES
S2         ▼
    ┌─────────────────┐       NO
    │ Traffic Congestion  │ ──────►
    │   on Next Lane?     │
    └─────────────────┘
           │ YES
S3         ▼
    ┌─────────────────────┐
    │ Shift Vehicle Position │
    │ toward Opposite Side   │
    │   from Next Lane       │
    └─────────────────────┘
           │
           ▼
        ( END )
```

European Patent Office

**EUROPEAN SEARCH REPORT**

Application Number

EP 05 01 7133

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,A | DE 10 2004 027983 A1 (DAIMLERCHRYSLER AG) 21 April 2005 (2005-04-21) * paragraph [0005] - paragraph [0024] * * paragraph [0048] - paragraph [0065] * ----- | 1-12 | B60K31/00 G08G1/16 |
| P,A | DE 103 49 211 A1 (ROBERT BOSCH GMBH) 25 May 2005 (2005-05-25) * the whole document * ----- | 1-12 | |
| A | US 5 929 785 A (SATONAKA ET AL) 27 July 1999 (1999-07-27) * column 2, line 66 - line 34; figures 2,4,5 * * column 4, line 40 - column 7, line 16 * ----- | 1-3,11, 12 | |
| A | US 6 133 825 A (MATSUOKA ET AL) 17 October 2000 (2000-10-17) * column 2, line 1 - line 59; figures 4-6 * * column 6, line 40 - column 7, line 40 * ----- | 1-3,11, 12 | |
| A | EP 1 275 573 A (NISSAN MOTOR COMPANY, LIMITED) 15 January 2003 (2003-01-15) * the whole document * ----- | 4 | TECHNICAL FIELDS SEARCHED (Int.Cl.7) B60K G08G |

The present search report has been drawn up for all claims

| Place of search | Date of completion of the search | Examiner |
|---|---|---|
| Munich | 17 October 2005 | Seisdedos, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 7133

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2005

| Patent document cited in search report | | Publication date | Patent family member(s) | | Publication date |
|---|---|---|---|---|---|
| DE 102004027983 | A1 | 21-04-2005 | NONE | | |
| DE 10349211 | A1 | 25-05-2005 | WO | 2005044652 A1 | 19-05-2005 |
| US 5929785 | A | 27-07-1999 | DE | 19743726 A1 | 23-04-1998 |
| | | | JP | 3577851 B2 | 20-10-2004 |
| | | | JP | 10109564 A | 28-04-1998 |
| US 6133825 | A | 17-10-2000 | JP | 3513428 B2 | 31-03-2004 |
| | | | JP | 2000344033 A | 12-12-2000 |
| EP 1275573 | A | 15-01-2003 | JP | 2003030793 A | 31-01-2003 |
| | | | US | 2003014162 A1 | 16-01-2003 |

For more details about this annex : see Official Journal of the European Patent Office, No. 12/82